(19)

Europäisches
Patentamt
European
Patent Office
Office européen
des brevets

(11) **EP 4 198 818 A1**

(12) **EUROPEAN PATENT APPLICATION**

(43) Date of publication:
**21.06.2023 Bulletin 2023/25**

(21) Application number: **21215579.0**

(22) Date of filing: **17.12.2021**

(51) International Patent Classification (IPC):
**G06K 9/62** *(2022.01)*      **G06V 10/28** *(2022.01)*
**G06V 20/52** *(2022.01)*      **G06V 40/16** *(2022.01)*

(52) Cooperative Patent Classification (CPC):
**G06V 10/28; G06F 18/217; G06F 18/285;
G06V 20/52; G06V 40/161;** G06V 20/53;
G06V 20/625

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NATIX GmbH
20354 Hamburg (DE)**

(72) Inventors:
• **Muck, Lorenz
20354 Hamburg (DE)**
• **Mogharian, Omid
22307 Hamburg (DE)**

(74) Representative: **Heinemeyer, Karsten
AdvInno Patent-u. Rechtsanwaltspart. mbB
Heinemeyer & Joachim
Sandstrasse 17-23
23552 Lübeck (DE)**

(54) **METHOD TO DESIGN A PRIVACY PRESERVING OBJECT DETECTION PROCESS, OBJECT DETECTOR AND OBJECT DETECTION SYSTEM**

(57)     The invention relates to design a method for privacy preserving object detection process that performs objects detection on the images/video frames that are binarised (thresholded) and the use of such a privacy preserving process.

The object detection process allows a personal identifiable information free detection of objects, people and/or events.

```
┌─────────────────────┐      ┌─────────────────────┐      ┌─────────────────────┐
│ Method to discover  │   1  │ Find a Privacy      │   2  │ Find/Build a Object │
│ a object detection  │ ───> │ Preserving          │ ───> │ detection that can  │
│ over privacy        │      │ thresholding        │      │ perform over        │
│ preserving          │      │ mechanism           │      │ selected            │
│ Thresholding        │      │                     │      │ thresholding        │
│                     │      │                     │      │ mechanism           │
└─────────────────────┘      └─────────────────────┘      └─────────────────────┘
```

Fig.1

EP 4 198 818 A1

**Description**

The present invention relates to a method to design a privacy preserving object detection process that performs object detection on images and/or video frames that are binarized, respectively thresholded. The object detection process is executable by an object detector and designed based on selected suitable threshold strategies for images. This detection process allows a personal identifiable information free detection of an object, a person and/or a corresponding event.

In recent years, digital image processing has become more and more important. In different technical fields digital image processing is used to process digital images through various algorithms. In general, digital image processing or analysis involves steps of image evaluation to extract meaningful information, and can include tasks such as finding shapes, detecting actions, counting objects, texture analysis or improving image quality. Here, digital image processing or image analysis covers a wide range of techniques, for example image enhancement to prepare images to display or for analysis, image segmentation to isolate regions and objects of interest, noise removal using morphological filtering or deep learning and image analysis to extract statistical data.

The performance and development of digital image processing are mainly affected by three factors. First the development of computers, second the development of mathematics, especially the creation and improvement of discrete mathematics theory and third the demand for a wide range of applications in the environmental, agriculture, military, industry and medical sectors. One specific field of engineering for digital image processing is the detection of objects or people. In this regard, images as well as series of images like video frames are the digital representation of unique properties of objects in an environment, e.g. of people, animals, buses, ships, boats, aircrafts, airplanes, drones etc.. Therefore, digital processing is focused on the efficient extraction and manipulation of these solitary properties. In this connection, main applications for image recognition systems often are related to industrial production processes as well as safety and area monitoring. Moreover, machine and deep learning models have empowered these systems by providing the techniques and tools to autonomously design the application oriented generalized complex mathematical models that are nearly impossible to define manually. However, the advanced approaches using artificial intelligence, e.g. Convolutional Neural Networks (CNN), have raised serious threats to organizational and individual privacy. In this context, face recognition systems are capable of threatening people's privacy or personal identification by manipulating or modifying characteristic features of the captured image or video.

In general, digital image analysis is usually about extracting important information from digital images, mainly automatically and with the help of digital methods, in particular for optical object recognition from so-called real-world data. The objects to be detected are people or objects, and additionally the recognition of characters and/or text on digital images captured by a camera or scanner is a very important application of object identification. However, often the quality of a captured image is not optimal for further digital processing and extracting the required information. In particular, for the recognition of specific features like characters the image quality often is insufficient due to low image resolution, low contrast between characters, text and background or poor image sharpness, partially because of movements.

Regarding the above-mentioned, US 2013/0028481 A1 describes a system and method for processing license plate image data. Here, a processing module is designed to receive an image comprising a license plate and, from the image, localize a region of the license plate itself. In addition, the information about the license plate region is extracted and license plate distortion parameters are inferred. Based on these steps, it is possible to geometrically correct the image using the inferred license plate distortion parameters. Thus, the license plate image can be iteratively sharpened to optimize the quality of the license plate image. Further, processing parameters can be modified and applied to the image data in a feedback-based loop for further optimization. From the aforesaid it is clear that the system and method is used to improve the quality of a captured image to ensure a reliable identification of a particular object, according to the technique described, a license plate.

To realize an object detection system usually binary images are evaluated, wherein edges and certain shapes of said binarized images are detected. Therefore, in a first step a color image is directly binarized or initially converted into a grayscale image in an intermediate step.

Image binarization is the process of taking an image and reducing the information content respectively the data volume, e. g. by converting it to black-and-white, preferably reducing the information contained within the image from 256 shades of gray to two, namely black and white. However, sometimes digital images are quantized to 32, 64, 128 or 512 intensity levels for certain applications, and even up to 4096 are often used in medicine. In this context, it is clear that more intensity levels allow better representation of an object but then, bigger data memories are required.

In digital image processing, thresholding is the simplest method of segmenting images. From a grayscale image, thresholding can be used to create binary images. The simplest thresholding methods replace each pixel in an image with a black pixel if the image intensity is less than some fixed constant T, or a white pixel if the image intensity is greater than that constant.

The process of binarization works by finding a threshold value in a histogram, approximately representing the distribution of brightness or different shades of gray, wherein the threshold effectively divides the histogram into two parts, each representing one of two objects or the object and the background.

Most thresholding algorithms work by using some type of information to make a decision about where the threshold is. Sometimes the information is statistical and uses the mean, median or entropy. Alternatively, information is in the form of shape characteristics of the histogram. Otsu's algorithm is one of the classical thresholding algorithms introduced by Nobuyuki Otsu in 1979. In the simplest form, the algorithm returns a single intensity threshold that separates pixels into two classes, foreground and background. This threshold is determined by minimizing intra-class intensity variance, or equivalently, by maximizing inter-class variance.

Taking into consideration, object recognition systems known from the prior art as well as problems and threats potentially caused by these systems one object of the invention is to design an object detection process executable by an object detector for personal identifiable information free detection of the objects in an image that is independently realisable, ensures privacy preservation and minimizes the risk of human or object identity manipulations. Therefore, it is one object of the invention to provide a method to design an appropriate object detection process as well as a system being able to detect an object within a captured image without identifying solitary properties of the persons in the image. Another objective is to design a process that an object detector can perform such that it could reliably classify objects within a captured image or video frame without identifying the object as to ensure privacy preservation. It is therefore another object of the invention to specify a suitable threshold strategy for image or video frame binarization and to indicate an appropriate object detector. It is therefore also a goal of the invention to provide an effective workflow using a threshold strategy in a suitable mode to ensure privacy preservation. Nevertheless, an object detection system according to the invention should be robust as well as precise enough to detect and categorize objects within a monitoring area.

The above goals are met with a method to design an object detection process according to claim 1, an object detector according to claim 8 as well as with an object detection system according to claim 9. Furthermore, in claim 15 a system for area monitoring using the invention is indicated. Preferred embodiments of the invention are disclosed in the dependent claims and will be explained in detail in the following description. Additionally, certain specific embodiments of the invention are explained with the help of drawings.

The invention relates to a method to design an object detection process executable by an object detector for personal identifiable information free detection of the objects in an image comprising the steps of

1. Selecting a thresholding strategy
2. Run object detection algorithms on a test set of thresholded images evaluate if object detection performs as expected. The evaluation will be based on mAP and recall a particular thresholding scheme and would be compared to object detection performance on normal images.
3. Assuring privacy preserving level of threshold strategy: :

  a. Run various face detection and clustering algorithms on the test data (thresholded sample images) and an measure the performance of such algorithms
  b. Retrain face recognition algorithms with thresholded images and run it against test data and measure the performance of such algorithms

4. Assuring Reversibility resistance: the resulting image material from thresholding mechanism, if and how can be reversed to original image material or the similar image

The result of this process is a privacy preserving thresholding mechanism that is applied on images and processed by a suitable object detector where objects will be seen on an image and assigned to a defined object group, while specifics and/or personal identifiable information are not extractable from the images.

Of course, whenever the expression "image" is used it should be understood that object detection according to the invention can be used to detect either objects on single images or in video frames. Furthermore, it should be clear that the detection of objects is equivalent to the detection of people, animals and/or events. Thus, an object detection process is advantageously used in area monitoring systems for the detection of specific events or for the detection of the presence of objects, people and/or animals.

With the help of the invention a personal identifiable information free object detection is realized via identification of a predefined set of image adjustments using threshold strategies that are resilient to algorithms for the recognition of personally identifiable information like face recognition, body shape recognition or the recognition of number plates. Here, it is of importance that images and video frames are the digital representation of the unique properties of objects in an environment, e.g., humans, cars, buses, ships, boats, aircrafts, airplanes, drones, etc., reaching, leaving or located in a monitoring area. The fields of computer vision known from the prior art are focused on efficient extraction and manipulation of these solitary properties for the better understanding of a portrait or scene. Therefore, machine and deep learning models (AI-techniques) have recently further empowered these fields by providing the techniques and tools to autonomously design the application oriented generalised complex mathematical models that are nearly impossible to define manually. However, the advanced AI approaches (e.g. CNNs) have raised a serious threat to organizational and individual privacy, e.g. face recognition threatening people's privacy or human identity manipulation via modifications in the captured images or video frames. Using an object detection process designed or generated according to the invention and its implementation into suitable object detectors provides a computer vision approach that is independent from above-mentioned threats and ensures privacy preservation.

According to the invention, the manipulation and preservation of unique characteristics, in particular semantic details of images, is ensured by using image thresholding, because the produced binarized image consists of only "255" and "0" values, while the general characteristics except aspect ratio are eliminated. Therefore, after providing a set of suitable test images in a further step, preferably at least two threshold strategies are examined and tested, as well as their optimal adjustment settings are varied and set such that the output binarized images and/or video frames preserve a comparatively large proportion of semantic details. As far as an appropriate threshold strategy and its adjustment settings are specified, in a next step this threshold strategy is implemented into an object detector.

Preferably Scikit-image, OpenCV and/or PIL, which provide multiple approaches for the pre-processing of RGB-images, for instance, HSV colour transformation, image negatives etc., and their thresholding strategy are used.

Some important thresholding approaches, which are advantageously usable with the invention, together with their mathematical formulations and a short description are listed in the table below:

| Strategy | Mathematical Formulation | Descriptions |
|---|---|---|
| Simple Thresholds | $dst(x,y) = \begin{cases} maxval\ if\ src(x,y) > thresh \\ 0 \qquad\qquad Otherwise \end{cases}$ | Accepts only grayscale images, uses global threshold value, struggles with different lighting conditions in various areas, simple and fast. |
| Adaptive Thresholds | $dst(x,y) = \begin{cases} maxval\ if\ src(x,y) > T(x,y) \\ 0 \qquad\qquad Otherwise \end{cases}$<br>Usually used with gaussian kernel | Accepts only grayscale images and uses kernels, e.g. gaussian kernel to determine the threshold for a pixel based on a small region around it. |
| Niblack Threshold and variants e.g. Sauvola Threshold | $T_{Niblack} = \mu + k * \sigma$, T is threshold value<br>$\sigma = \sqrt{\dfrac{\sum_{i=1}^{i} p2_i}{NP} - \mu_i^2}$ | Type of adaptive thresholding, computation of threshold is based on the region's local mean and standard deviation, gives robust results but adds noise to the output image. |
| Otsu's Binarization | $\sigma_w^2(t) = q_1(t)\sigma_1^2(t) + q_2(t)\sigma_2^2(t)$<br>$\sigma_1^2 = \sum_{i=1}^{t}[i - \mu_1(t)]^2\dfrac{P(i)}{q_1(t)}$ &<br>$\sigma_2^2 = \sum_{i=t+1}^{I}[i - \mu_2(t)]^2\dfrac{P(i)}{q_2(t)}$ | Determines the threshold value automatically with local mean and standard deviation, suitable for images with histogram of bimodal distribution and gives better results when used with gaussian kernel. |
| Multi Otsu's Binarization | $\{t_1^*, t_2^* \ldots t_{M-1}^*\} = max\{\sigma_i^2(t_1, t_2 \ldots$<br>$\sigma_i^2(t) = \sum_{i=1}^{i} q_i(t)\sigma_i^2(t)$ | Extended version of Otsu's binarization, comparatively faster and more optimised while the working principle is similar to Otsu's binarization. |
| Image Negatives | $I = \sim(S(N_x, N_y, N_z))$ | Generated by taking the pixel wise "not" of image. Converts RGB image into its negative that results in loss of spatial; details and enhances semantic properties similar to thresholding. |

As mentioned above, when a suitable threshold strategy and its adjustments settings are specified an object detection process, respectively an object detector on which the process is implemented is identified and the respective combination of object detection process and threshold strategy is evaluated and verified to what extent the system of object detector and identified threshold strategy performs as expected.

Here, preferably it is considered, that the general characteristics of objects captured in images and/or videos have spatial (relative aspect ratio, intensity, brightness and contrast) while the unique characteristics have semantic (shape, location, orientation, and sheerness) properties, and that object detection is strongly dependent upon unique properties. Conversely, object recognition, instead of object detection, requires both, general and unique, properties because of the information associated with colour intensities (channels) of pixels.

Therefore, the method for designing an object detection process uses thresholded images and/or video frames acquired from the step described above, which are binarized and keep strong semantic details. The object detectors known from the prior art accept RGB images, so the models are retained and optimized with the datasets of these thresholded images. Therefore, in this step of the method to design an object detection process according to the invention the object detection architecture is retrained and deployed to evaluate the efficiency of the identified threshold strategy on the respective thresholded, respectively binarized images and/or video frames as following:

If the mean Average Precision (mAP) and/or the ratio of the number of true positive detected objects to the total number of actual objects (recall) of the object detector on which the identified object detection process is implemented is outside a target range, respectively either quite low or very high, then the object detector is significantly larger with bigger parametric space that might have resulted in either under-fitting or over-fitting etc. or strongly optimized which leads to the conclusion that the thresholding strategy under examination has loose ends and should either be tuned and evaluated again or dropped if the object detector's performance has been assured.

If the mean Average Precision (mAP) and/or the ratio of the number of true positive detected objects to the total number of actual objects (recall) of the object detector is inside a target range, thus the object detection process is reliably working using the identified and/or adjusted thresholding strategy, e.g. Otsu's binarization, then it's a suitable system with object detector and threshold strategy, and is suitable for realization, in particular for integration info an object detection system and/or an object recognition system. The back and forth relation of the two steps of the method for designing an object detection process according to the invention resulting in repeating these steps if necessary, for experimentation, tuning and evaluation enhances the complexity, sensitivity and importance of these steps.

Some important object detectors using suitable object detection processes, which are advantageously usable with the invention, together with a short description of the supported backbone nets, their outputs and benefits are listed in the table below:

| Object Detector | Description | | |
| --- | --- | --- | --- |
| | Supported Backbone Nets | Outputs | Benefits |
| Faster-RCNN | ResNet and VGG | B-boxes and Class labels | Most robust, fastest and computationally efficient among two-stage detectors |
| Mask-RCNN | ResNet and VGG | B-boxes, Segmentation masks and Class labels | Only robust object detectors that also do instance segmentation, highly robust but computationally expensive. |
| You Only Look Once (YOLO) - V 3 and V5 | -- -- | B-boxes and Class labels | Several variants including tiny YOLO (suitable for small devices), more robust, faster but need a large number of instances for training (without TL). |
| RetinaNet | ResNet, VGG, MobileNetV1 & V2 | B-boxes and Class labels | The most robust one-stage detector (due to focal loss function), computationally expensive, optimised quickly and needs small number of instances for learning |
| EfficientDet | EfficientNet based on MobileNetV2 | B-boxes and Class labels | Computationally most efficient, fast, suitable for small devices, straggles a lot with robustness, hard to optimize due to small number of parameters and requires large numbers of instances for learning. |

In a further preferred embodiment of the invention at least one, preferably at least two different face detection and clustering algorithms are executed using the thresholded sample images and the performance of these algorithms is measured. According to this technical solution, a face detection and clustering approach, preferably at least two of them, are examined to detect and cluster objects, e.g., faces in these thresholded images, while their performances are preferably evaluated as follows:

The robustness of one of the particular object respectively face detection algorithms, given in the table below, is based on its mean Average Precision (mAP) and/or the ratio of the number of true positive detected objects to the total number of actual objects (recall) (preferably for CNN-based architectures):

| Face Detection Algorithms | Descriptions |
|---|---|
| Haarcascade (OpenCV) | A trainable face detection model provided by the OpenCV, optimized for front face detection, fast in real-time applications. |
| Face Detection using Dlib | Robust to the scale and orientation of faces due to a CNN-based pipeline, needs to apply post processing clustering algorithm, e.g. chinese whispers, for clustering the same faces.. |
| Multi-task Cascaded Convolutional Neural Networks (MTCNN) | Consists of three stages and uses a neural network for each stage, shows better performance and needs to apply a post processing clustering algorithm such as k-mean. |
| YOLO V5 and RetinaNet | Custom CNN-based object detectors, robust but computationally expensive, require large numbers of images for training and optimization. While, a custom clustering scheme is followed as post processing. |

According to this step of a method to design an object detection process, the object, especially face clustering or classification is performed by answering the question, "how many times an object respectively face has appeared in the dataset". The performance of clustering is then advantageously evaluated with one of the metrics given in the table below.

If the thresholded object is easily detected and clustered, then, it would be assessed as privacy invading which means that the identified thresholding strategy has not suppressed the information correctly. Therefore, in this case the threshold strategy and its adjustments settings are either revised, respectively optimised, or dropped and the method to design an object detection process is started again with choosing another threshold strategy and identifying suitable adjustment settings.

| Clustering Performance Evaluation | Mathematical Formulation | Descriptions |
|---|---|---|
| Homogeneity, completeness and V-measure | $\upsilon = \dfrac{(1 + \beta * homogeneity * completenes}{(\beta * homogeneity * completeness)}$ $0 > \beta \geq 1$ | V-measure is qualitatively analyzed in terms of homogeneity and completeness, has bounded scores and is not suitable for large numbers of clusters. |
| Adjusted Rand Index | $RI = \dfrac{a + b}{C_2^{n_{samples}}}$ | Easy to interpret, bounded range, optimal for large numbers of clusters. However the score is often close to 1.0 even the clusters are quite distant. |

In a further conceivable step, an object recognition algorithm, preferably at least two object recognition algorithms, is retrained with thresholded images and run against test images, where the performance of the respective algorithm under examination is measured.

This step aims at studying the problem of object recognition such as face recognition using a few examples. Here, it is considered, that in case a limited set of labeled thresholded images of an object or a person is available, and used to retrain an object recognition algorithm.

In case if the object/face recogniser is often capable of identifying a new incoming thresholded image of a particular person or object, it will not be assured that the thresholding algorithm is strong enough . This is check is done to make sure matching of detected objects and identifying them with objects being part of existing publicly available and labeled datasets, e.g. the pictures of people normally shared on social media, is avoided.

Thus, in this step an identified object recognition system is analysed and evaluated taking the following properties into account. These properties are considered for evaluation along with the individual evaluation metrics:

- estimation of the size of training dataset for new object instances,
- number of labeled images per unique object as size of training data and class imbalancement,
- mean Average Precision (mAP) and/or the ratio of the number of true positive detected objects to the total number of actual objects (recall) values of the retrained and optimized object recognition system.

Some face recognition algorithms which are usable for this privacy invention examination, together with a short description and the default evaluation metrics are listed in the table below:

| Face Recognition Algorithms | Descriptions | Default Evaluation Metrics |
|---|---|---|
| EigenFace | Based on principle component analysis (PCA), quite robust, however, clustering strategy has to be implemented as a post processing step. | Euclidean Distance and Bray Curtis |
| DeepFace | Least accurate in literature, consists of "8" numbers of Conv layers with quite complicated face alignment strategy and requires large numbers of instances per class for training. Simple clustering strategy has to be implemented as post processing. | Weighted Chi-Square with Labeled Faces in the Wild (LFW) dataset |
| FaceNet | Dedicated CNN-based network designed for face detection, includes clustering algorithm based on minimizing the distance between similar face images, needs to be trained, robust but computationally expensive and theoretically requires less number of instances for retraining and optimization. | L2 (distance between two classes) with Labeled Faces in the Wild (LFW) dataset. |
| DeepID Systems (V1, V2 and V3) | Better face landmark detector, smaller network with less number of training parameters, also requires less instances (600 approx) per class for training due to strong architecture, and is less accurate than FaceNet but efficient enough to experiment with. | Jt. Bayes with Labeled Faces in the Wild (LFW) dataset |

Advantageously, at least one step comprising an image reconstruction mechanism is realized to evaluate the validity of privacy preserving level of thresholding mechanism. Using image reconstruction algorithms over thresholded images, pursue a way to regenerate the original images and evaluate how much the reconstructed images are similar to the original image in the test dataset.

According to this step, it is examined whether thresholded images can be reversed to images that contain personally identifiable information (PII) and how similar it is to the original image, i.e. is it close enough to identify a person or object with a high enough confidence.

Preferably, the thresholded images are reconstructed resistant to reconstruction and/or recoloring with simple deep CNN-based architectures, as well as Generative Adversarial (GAN) based image reconstruction networks. Furthermore, it is conceivable that the reconstructed images are compared with images of the original (non-thresholded) set by analysing symmetries in the compared images and observing the distance between the vectors of two objects.

The respective approach is then advantageously evaluated either with "peak signal-to-noise ratio (PSNR), structural similarity index (SSIM) or patchbased contrast quality index (PCQI)" metrics. In a next step, the reconstructed and/or colorized images are preferably compared with test images, which are non-thresholded images, to analyse the symmetry in two images. Conceivable approaches use "EigenFace", based on PCA and observing the distance between the vectors of two faces, and "image descriptors, like for example SIRF and SIFT. However, CNN-based architectures, for instance,CNN-feature embedding and SimNet could also be considered for similarity analysis.

Here, preferably the face recognition algorithms are used to check whether the reconstructed faces are recognized correctly i.e. it reconstructed images containing the original personal identifiers.

Considering the CNN-based and GAN-based reconstruction approaches are computationally expensive, the measurement of the computation requirements are desired to be dealt with in this step.

Some image colourization and reconstruction algorithms which can advantageously be used privacy preservation measuring of thresholding mechanism in this invention, together with a short description and the evaluation metrics are listed in the table below:

| Image Reconstruction Architectures | | Description | Evaluation Metrics |
|---|---|---|---|
| Plain Networks | Deep Colorization | Simple, straightforward architecture with stacked convolutional layers, i.e., no, or naive skip connections. Accepts grayscale input images, while trained on 2688 total images of 47 classes. Least robust architecture. | PSNR SSIM |
| | Colorful Colorization | One of the first attempts to colorize grayscale images, more robust, trained for 450K iterations, however the training data details are not known. | PSNR SSIM PCQI |
| Generative Adversarial (GAN)-based networks | Real-Time User-guided Colorization | Based on two variants, namely local hint and global hint networks, both of which utilize a common main branch for image colorization. Least robust in the respective group. Training dataset could either be COCO or Pascal VOC | PSNR SSIM |
| | Instance-Aware Image Colorization | Solved the issue of colorization of images with multiple objects. Model consists of an "off-the-shelf object detector", "end-to-end image colorization network" and "fusion module to compile results". Training dataset could either be COCO or Pascal VOC. | PSNR SSIM PCQI |
| | Bayesian Reasoning with Deep-Learned Knowledge | Developed by "Torsten A. Enßlin" at Max Planck Institute for Astrophysics and claimed as the best reconstruction CNN-based architecture to-date. It works on the Bayesian Inference problem. Multiple CNNs (GANs and VAEs) architectures are combined to make this approach quite flexible for diverse problems of image reconstruction. | Gaussian approximations e.g.Gaussian priori$\Leftrightarrow$ ADVI and MGVI |

According to another preferred embodiment of the invention, the method for designing an object detection process is characterized in that the object detection process avoids the recognition of people and/or the identification of objects. Furthermore, in addition or as an alternative it is conceivable that the object detection process is designed to identify at least one defined event.

Furthermore, the invention relates also to an object detector on which an object detection process designed by the method described above is implemented and to an object detection system comprising such an object detector.

In addition, the invention refers to an object detection system comprising a detector for capturing an image of an object and generating at least one input signal and/or input-data set based on the captured image, a transceiver and/or a transmission path transmitting said input signal and/or input-data set to at least one data-processing unit for processing the at least one input signal and/or input-data set such that at least one image information, value and/or image file regarding the captured image is created, and an object recognition module designed to identify the object based on the at least one image information, value and/or image file created by the object detector, characterized, in that the data-processing unit comprises at least one object detector, and in that a thresholding unit creates a data-set related to a binary image of at least one part of the object using a threshold operation, said data-set related to a binary image of the object is provided to the object detector and/or object recognition module, which is designed to assign the object to a defined, entered and/or stored object-category based on an evaluation of the data-set related to the binary image of the object, wherein for realizing the threshold operation a threshold strategy is implemented in the thresholding unit in order to reduce an information content of the data-set related to the binary image of the object in such a way that data and/or information referring to unique properties of the object needed to identify an individual object are not available for object recognition executed by the object recognition module.

Furthermore, the invention also relates to a method for the detection of an object comprising the steps of

- capturing an image of an object and generating at least one output signal and/or output-data set based on the captured image,
- transmission of said output signal and/or output-data set to a data-processing unit and processing the at least output input signal and/or output-data set in the object detector such that at least one image information, value and/or image datum regarding the captured image is created, and

- identifying the object with the help of a object recognition module based on the at least one image information, value and/or image datum created by the object detector,

According to the invention the method is characterized, by the steps of

- generating a data-set related to a binary image of at least one part of the object using a threshold operation, whereas due to the threshold operation an information content of the data-set related to the binary image provided for an evaluation by the object recognition module is set to a level making it impossible to recognize unique object properties allowing recognition of an individual object,
- transmission of said generated data-set related to the binary image to the object recognition module, and
- evaluation of the data-set related to the binary image by data processing in the object recognition module in such a way that the object is assigned to a defined, entered and/or stored object-category.

Hereinafter, the invention is set forth in more detail on the basis of a specific embodiment without restriction of the general idea of the invention.

Besides monitoring of public areas, buildings and industrial sites one very interesting application for the invention is related to the counting of the density of people in indoor and outdoor areas, in particular to improve the planning of cities as well as buildings and their infrastructure.

Planning has been ruled for decades by automobile interests but that is changing now. Insight on crowd size and density is becoming more popular to design better and safer streets, parks, bike-share systems and public-transport networks. In this regard, manual counting is expensive due to the deployment of human resources. Besides this, it is prone to error when relying on continuous staff attentiveness. Furthermore, manual solutions are often limited to counting at entrance or exit points, which results in inconvenience, and known technical solutions uses cameras and focuses on the area surveillance. One problem with these systems is that they always infringe privacy. Due to this issue, often such systems are more often discarded than used.

In using a monitoring system based on an object detection process designed according to the invention, a camera-based live and over time people counting with analytics and reporting tools are realizable for better planning. Thus, it is possible to determine the number of people as well as a density counter for an area of interest, where all data can easily be visualized via dashboard, heat maps to show the position, movement and behaviour of crowds. Furthermore, reports can be created and shared with other stakeholders, for example between departments being responsible for the planning and emergency services.

Since, according to the invention on the one hand data-processing takes part on the camera or device in the same place as the camera and thresholding happen before or latest right after a image is created no personal data are collected, stored or shared, and on the other hand objects, people and/or events are detected without recognizing unique information privacies of all people entering or located in the monitoring area are ensured.

The invention is compatible with edge computing paradigm. Not only is there no personally identifiable information (PII) collected from the first place due to use of thresholding mechanisms as pre-processing units, but also no data is sent on the central data servers. Instead, the object detector is directly installed on a camera and/or an edge computer near camara, where only anonymized information of objects and/or events is generated and can then be transferred to a central computer system and/or a server of the choice for further processing and evaluation.

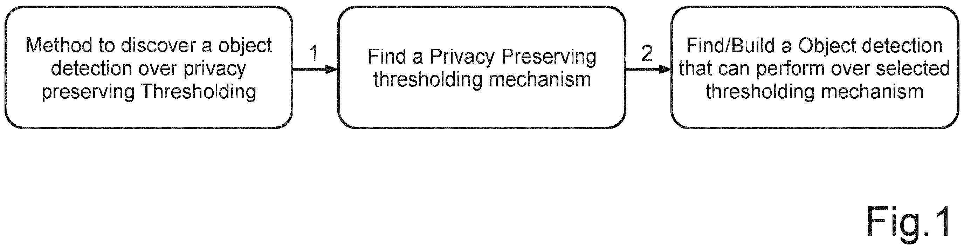

According to a preferred embodiment of the invention to design a suitable privacy preserving object identification process method would be to test multiple thresholding strategies are tested in two ways, by testing whether the object detection is at a desired accuracy level, and whether the described attacks to identify personal information are unsuccessful. The associated process scheme is shown in fig. 1.

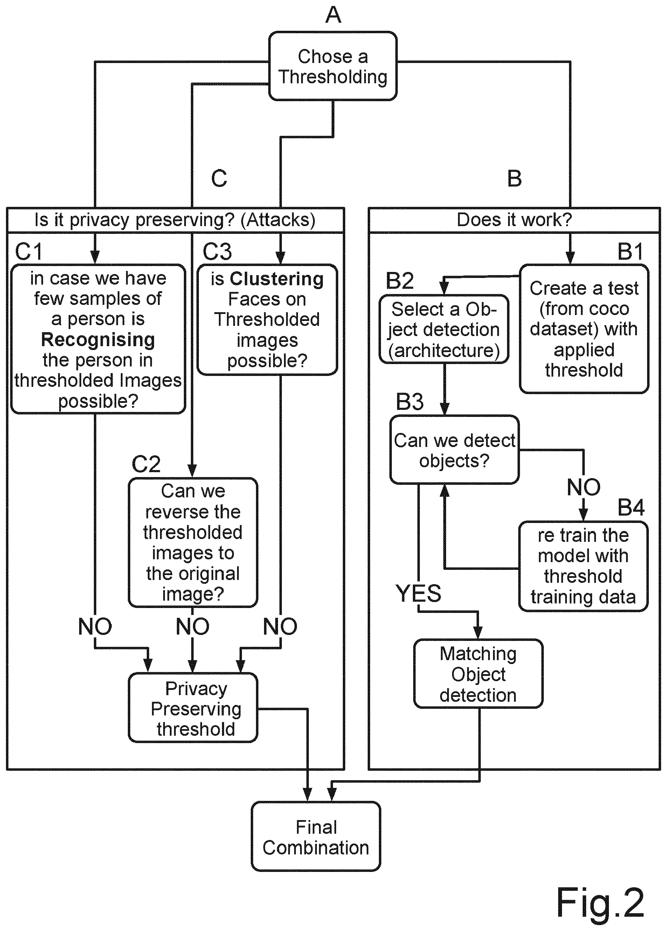

In addition, Fig. 2 shows a process scheme of a method according to a specific embodiment of the invention to design a privacy preserving object detection process executable by an object detector for personal identifiable information free detection of an object, especially a person. In step A a thresholding strategy which seems to be suitable is chosen. Then in process step B is tested whether the object detection is at a desired accuracy level, especially if objects can be detected, while in process step C is tested whether the attacks to identify personal information are unsuccessful.

In step B1 a test data set from coco dataset with applied thresholds is created, and in step B2 a object detection architecture is chosen and provided for further testing. With the following step B3 it is tested, whether objects can be detected as requested. If it is not possible to detect objects as requested, in step B4 the used model is retrained with the help of training data. In case the detection architecture, especially the combination of thresholded data and a specific object detection model, is able to detect objects a thresholding strategy to be used to detect objects as requested is identified.

Furthermore, according to process step C it is tested whether the thresholding strategy also ensures privacy protection with respect to identified objects. Therefore, in step C1 several data set relating to different persons, e.g.

images of different persons, are provided, thresholded and it is tested whether an individual person can be recognized in these thresholded images. Furthermore, in step C2 it is tested whether the thresholded images can be reversed to the original images, and in step C3 whether it is possible to cluster detected objects and/or specific features of objects, e.g. persons' faces, on thresholded images. If the results of steps C1, C2 and C3 are all "no" a privacy preserving threshold strategy has been identified.

Finally, if the testing according to process steps A and B provides a suitable thresholding strategy, the identified thresholding strategy can be implemented into an objection detection system to ensure privacy preserving object detection as to make sure that it is not possible to recognize and identify individual objects and/or persons.

A preferred embodiment of a combination of a thresholding strategy and an object detector would be Otzu Thresholding using Scikit-image on Yolo Architecture (V3&V5). This system has a potential to be implemented within multiple kinds of processing units, including in software as well as hardware units. However, one preferred embodiment of the technical implementation would use a standard camera that contains a first optical sensor in the camera hardware and detector devices, which can apply the selected thresholding (e.g. Otzu Thresholding). This camera is connected to a switch through a PoE cable. The switch is connected with the data processor/edge computer (e.g. rasperpi) through an ethernet cable and the video transferred via known protocols such as RTSP.

**Claims**

1. Method to design a privacy preserving object detection process executable by an object detector for personal identifiable information free detection of objects comprising the steps of

   - providing and exploring at least one threshold strategy, and identifying adjustments settings so that thresholded images generated by using a threshold strategy selected from said at least one threshold strategy with identified adjustment settings preserve semantic details,
   - running a first object detection process on the set of test images using said selected threshold strategy with identified adjustment settings, and generating a set of thresholded sample images, retraining the object detection process by the selected threshold strategy, and/or determine a mean Average Precision (mAP) and/or a ratio of the number of true positive detected objects to the total number of actual objects (recall), whereat

      if the mean Average Precision (mAP) and/or the ratio of the number of true positive detected objects to the total number of actual objects (recall) of the object detection process using the selected threshold strategy is outside a target range the identification of adjustments settings of the threshold strategy is repeated or a second object detection process is executed using said selected threshold strategy or

      if the ratio of the number of true positive detected objects to the total number of actual objects (recall) is within a target range the selected threshold strategy is implemented into at least one object detection process.

2. Method according to claim 1,
   **characterized in** the following steps

   - providing a set of test images comprising personally identifiable information (PII),
   - running at least one face detection and/or clustering algorithm on the set of thresholded sample images, measuring the performance of said algorithms, and verifying whether said face detection systems is capable of detecting and classify an object without all the instance of the same object to one category, and
   - Use object (e.g. face) recognition algorithm with said set of thresholded sample images, running the retrained object recognition algorithm and measure the performance of such algorithms, and
   - repeating a fore-mentioned step with a retrained model with the selected thresholding mechanism to make sure the thresholding thresholding is reducing the information of images enough in a way that recognizing personally identifiable information (PII) is not possible

3. Method according to claim 1 or 2,
   **characterized in that** the object detection process is designed to avoid the detection of people and/or Objects to and repeat claim 1 and 2 until the object detection process performs as expected in such a way, that objects of interest are detected and/or classified without potential of recognising personally identifiable information (PII) of the objects in the images.

4. Method according to at least one of the precedent claims,

**characterized in that** the object detection process is designed to detect at least one defined object-related event.

5. Method according to at least one of the precedent claims,
**characterized in** the step of implementing a reversibility attack to evaluate the validity of the privacy preserving level of thresholding mechanism by reconstructing thresholded images to generate the original images, and comparing the reconstructed images with original test images comprising personally identifiable information (PII).

6. Method according to claim 5,
**characterized in that**, it is tested whether the thresholded images are reconstructable with simple deep CNN-based architectures, preferably with plain networks and/or Generative Adversarial (GAN) based image reconstruction networks and mesure how computationally expensive these approaches are.

7. Method according to claim 5 or 6,
**characterized in that** the reconstructed images are compared with at least one image of the set of test images by analysing symmetries in the compared images and/or observing the distance the vectors of two objects, preferably using EigenFace and/or suitable image descriptors and measure how well reconsting/re coloring approach perform.

8. Object detector for executing an objection detection process designed by the method according to at least one of the precedent claims is implemented.

9. Object detection system comprising at least one object detector according to claim 8.

10. Object detection system according to claim 9,
comprising a detector for capturing an image of an object and generating at least one input signal and/or input-data set based on the captured image, a transceiver and/or a transmission path transmitting said input signal and/or input-data set to a data-processing unit for processing the at least one input signal and/or input-data set such that at least one image information, value and/or image datum regarding the captured image is created, and an object detection module designed to identify the object based on the at least one image information, value and/or image datum created by the object detector, **characterized, in that** the data-processing unit comprises at least one object detector and **in that** a thresholding unit creates a data-set related to a binary image of at least one part of the object using a threshold operation, said data-set related to a binary image of the object is provided to the object detector and/or object detection module, which is designed to assign the object to a defined, entered and/or stored object-category based on an evaluation of the data-set related to the binary image of the object, wherein for realizing the threshold operation a threshold strategy is implemented in the thresholding unit in order to reduce an information content of the data-set related to the binary image of the object in such a way that data and/or information referring to unique properties of the object needed to identify an individual object are not available for object recognition executed by the object recognition module.

11. Object detection system according to claim 10,
**characterized in that** the thresholding unit is an integrated part of the detector, the object detector and/or the object detection module.

12. Object detection system according to claim 10 or 11,
**characterized in that** the object detection module comprises at least one subunit for running an object detection program, preferably chosen from a group of object detection programs containing Faster-RCNN, Mask-RCNN, YOLO-V3, YOLO-V5, RetinaNet and EfficientDet.

13. Object detection system according to claim 10 to 12,
**characterized in that** the object recognition module comprises at least one subunit for running a face detection algorithm, preferably chosen from a group of face detection algorithm containing Haarcascade (OpenCV), Face Detection using Dlib, Multi-task Cascaded Convolutional Neural Networks (MTCNN), YOLO V-5 and RetinaNet.

14. System for area monitoring comprising or connected to an object detection system according to one of the claims 9 to 13 and with at least one evaluation unit determining the presence, number, type, orientation and/or condition of objects, events, animals and/or people reaching, leaving and/or located in the area based on at least one image captured by the detector.

15. System for area monitoring according to claim 14 comprising an interface connected or connectable to a central control system of an emergency and/or a security service and/or a plant control center.

Method to discover a object detection over privacy preserving Thresholding
$\xrightarrow{\quad 1 \quad}$
Find a Privacy Preserving thresholding mechanism
$\xrightarrow{\quad 2 \quad}$
Find/Build a Object detection that can perform over selected thresholding mechanism

Fig.1

Fig.2

Europäisches
Patentamt

European
Patent Office

Office européen
des brevets

# EUROPEAN SEARCH REPORT

**Application Number**

EP 21 21 5579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | ZHONGZHENG REN ET AL: "Learning to Anonymize Faces for Privacy Preserving Action Detection", ARXIV.ORG, CORNELL UNIVERSITY LIBRARY, 201 OLIN LIBRARY CORNELL UNIVERSITY ITHACA, NY 14853, 30 March 2018 (2018-03-30), XP081240417, * the whole document * | 1-15 | INV. G06K9/62 G06V10/28 G06V20/52 G06V40/16 |
| T | YUNQIAN WEN ET AL: "IdentityDP: Differential Private Identification Protection for Face Images", ARXIV.ORG, CORNELL UNIVERSITY LIBRARY, 201 OLIN LIBRARY CORNELL UNIVERSITY ITHACA, NY 14853, 2 March 2021 (2021-03-02), XP081904175, * the whole document * | 1-15 | |
| T | CHATTOPADHYAY T ET AL: "Automatic Selection of Binarization Method for Robust OCR", 2013 12TH INTERNATIONAL CONFERENCE ON DOCUMENT ANALYSIS AND RECOGNITION, IEEE, 25 August 2013 (2013-08-25), pages 1170-1174, XP032502683, ISSN: 1520-5363, DOI: 10.1109/ICDAR.2013.237 [retrieved on 2013-10-10] * the whole document * | 1-15 | **TECHNICAL FIELDS SEARCHED (IPC)** G06K G06V |

The present search report has been drawn up for all claims

| Place of search | Date of completion of the search | Examiner |
|---|---|---|
| The Hague | 31 May 2022 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 198 818 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130028481 A1